# EUROPEAN PATENT APPLICATION

(11) **EP 4 620 980 A1**
(43) Date of publication of application: **24.09.2025**
(21) Application number: 24164690.0
(22) Date of filing: 20.03.2024
(51) Int. Cl.: C08B 15/00, D21H 25/04

(54) **A METHOD FOR RAPID HYDROPHOBIZATION OF CELLULOSE MATERIALS**

(71) Applicant: Jozef Stefan Institute, 1000 Ljubljana (SI)
(72) Inventor: Mozetic, Miran, 1000 Ljubljana (SI); Primc, Gregor, 1000 Ljubljana (SI); Vesel, Alenka, 1000 Ljubljana (SI); Zaplotnik, Rok, 1000 Ljubljana (SI)
(74) Representative: Patentni Biro AF d.o.o.

(57) **Abstract**

The present invention relates to methods for the treatment of cellulose or cellulosecontaining materials. Said materials treated according to the methods of the invention ensure appropriate hydrophobicity, which is necessary for the suppression of the mismatch in surface wettability of cellulose and surface tension of the liquid polymer useful for the synthesis of the cellulose-enforced polymer composites. The methods enable the adjustable contact angle of a water droplet deposited onto smooth cellulose materials or cellulose powder between about 70 and 120°. The methods of the invention employ hydrogen atoms as reactants for substituting the hydroxyl surface function groups with olefine groups. The maximum water contact angle is obtained after treating cellulose foils with H atoms of doses between about 10²¹ and 10²³ m⁻². The method does not release by-products except minute amounts of water vapor, so it is regarded as ecologically friendly for rapid hydrophobization of cellulose or cellulosecontaining materials. The methods do not change other functional properties like composition and structure of the bulk material, since the cellulose materials are not treated with energetic particles likely to be formed in hydrogen plasma, such as UV and VUV photons and positively charged ions.

## Description

### Field of the Invention

The invention belongs to the field of polysaccharides and methods for their preparation or treatment, more precisely to the field of methods for the preparation of cellulose, cellulose derivatives, or modified cellulose. The present invention relates to a method for rapid hydrophobization of cellulose materials, typically within a second of treatment, without modifying the functional properties of treated materials. The invention also pertains to paper and paper products treated with said method.

### Background of the invention and the technical problem

Cellulose is a polysaccharide consisting of linear chains of glucose units. It is the most abundant natural polysaccharide and is widely available. It is used mainly in the paper and textile industry, while powdered cellulose is used in the food industry and pharmaceutics. Powdered cellulose appears in different forms, from particles of irregular size to highly oriented fibers of a large aspect ratio. The degree of crystallinity varies, as do the mechanical properties like strength and stiffness of the cellulose. Powdered cellulose of high stiffness is useful for reinforcing polymer composites. The green transition favorites composites, which are made practically only from biobased materials, for example, polylactic acid or rubber reinforced with cellulose fibers. The as-produced cellulose fillers, however, will not provide the appropriate mechanical properties of polymer composites because of the mismatch in the wettability. While cellulose is highly wettable and quickly absorbs water or similar polar liquids because of the abundance of surface hydroxyl groups, the polymer materials useful for the matrix in the composite materials are at least moderately hydrophobic. The incompatibility of the wettable and non-wettable materials can be overcome by hydrophobization of the cellulose surface.

The wettability of polymer materials is usually measured by placing a water droplet on the surface and monitoring either the static water contact angle (WCA) or the soaking time. The measuring method is robust and reliable, if not highly accurate. The contact angle method is suitable for measuring the wettability of polymer materials that do not absorb water quickly, like polymer foils or hydrophobic polymer powder. The hydrophilic polymer materials in powder form usually absorb the water droplets before it is feasible to measure the water droplet contact angle. Highly wettable polymers will exhibit a low water contact angle, or/and a water droplet will be soaked into the hydrophilic polymer. In contrast, non-wettable polymers exhibit a large water contact angle, and a droplet dries before being absorbed into the polymer. A water droplet contact angle on neat cellulose with a smooth surface (like a cellulose foil) will be below 40°. Adequate wettability of a smooth polymer is assigned to the water droplet contact angle above 75°, while extremely non-wettable smooth polymers will exhibit a water droplet contact angle of 100-110°

Polymers of rough morphology or in the form of powders will either absorb a water droplet quickly after its deposition or exhibit a large water droplet contact angle, often between 100 and 180°, depending on the surface chemical structure. The neat cellulose powder will absorb a water droplet within a second, so before its contact angle is determined. Cellulose powder, hydrophobic enough to be useful for enforcing polymer composites, will not absorb water droplets - a water droplet placed onto the powdered hydrophobic cellulose will evaporate rather than absorb into the powder.

The aim of the invention is to design methods for hydrophobization of cellulose, thus improving its ability to stick well to hydrophobic materials.

### Prior art

A trivial method for the hydrophobization of cellulose is the deposition of a thin hydrophobic coating. Numerous techniques for depositing a hydrophobic coating on hydrophilic cellulose have been invented. The cellulose material in any form is treated with a surfactant and then soaked in a liquid, which contains a hydrophobic component. The hydrophobic component adsorbs on the surface of cellulose, which has been pretreated with an appropriate surfactant. This wet chemical method for suppressing the wettability of cellulose is reliable and relatively inexpensive but represents an ecological hazard upon inappropriate use.

An alternative to wet chemistry for the hydrophobization of cellulose is dry treatment, using gaseous plasma. It is well-known that the treatment of polymer materials with gaseous plasma causes the formation of surface functional groups. These functional groups serve as binding sites of hydrophobic molecules or hydrophobic molecular fragments. The advantage of using gaseous plasma is low consumption of hydrophobic material, but a disadvantage may be the application of ecologically hazardous gases, including fluorinated gases.

As early as 2000, a method for plasma-induced hydrophobization of polymer materials, including cellulose, was disclosed in patent application EP0985741. The polymer materials were treated by condensable radicals of fluorinated gases or vapors; said radicals were created upon plasma conditions, and the discharge used for sustaining gaseous plasma was preferably pulsed in solution described in EP0985741 in order to benefit from the appropriate degree of radicalization of fluorinated gases. The recommended treatment time was between 10 and 100 minutes, so the plasma-on time was between about 30 and 300 seconds, taking into account the duty cycle duration. The preferred gaseous precursors were C₂F₄ and C₃F₆.

Patent US11466406 discloses a method for plasma treatment of cellulose materials. The cellulose is first treated with a plasma sustained in argon with an admixture of various gases to increase the cellulose wettability. In the next step, the cellulose is treated with a plasma sustained in siliconized organic vapors. In this step, plasma is used to deposit SiOₓ-containing particles by surface condensation of radicals created from organic vapors upon plasma conditions. The procedure is repeated twice to obtain a perfectly non-wettable surface finish of cellulose substrate and optimal hydrophobicity. A similar technique using the same gaseous precursor has already been disclosed in patent application JPS59169507.

Patent application CN115770489 discloses a method for depositing non-wettable coatings on cellulose substrates. The cellulose substrates are treated with a gaseous plasma sustained at atmospheric pressure by dielectric barrier discharge to activate the cellulose surface. In the next step, a hydrophobic coating containing alumosilicates is deposited to ensure a non-wettable cellulose surface finish. The membranes treated according to this method were useful for water desalination and recovery of freshwater.

Patent application CN102212971 discloses the plasma treatment of cellulose materials, followed by treatment in an alkali solution to decompose cellulose to low-molecular-weight materials such as ethanol, butanol, and others. A similar method for similar purposes is also disclosed in patent application CN107058424. Conversion of cellulose to amino acids using gaseous plasma sustained in nitrogen and hydrogen is disclosed in US4414084 (A).

Patent application GB2120694 discloses a method for rendering material hydrophobic, wherein the material is treated with hydrogen plasma. This short document mentions paper and similar products made from cellulose or containing cellulose, but shows only an example for porous materials. The preferred hydrogen pressure in the plasma reactor is between 0.1 and 1 torr, the hydrogen flow between 10 and 50 sccm, the discharge power between 40 and 100 W, and the treatment time is up to about 15 minutes. Such a long treatment time is not very practical, but GB2120694 reports beneficial effects to the filtering paper. Furthermore, hydrogen plasma is renowned as a powerful source of radiation, as explained in the scientific paper U. Fantz et al., (Quantification of the VUV radiation in low-pressure hydrogen and nitrogen plasmas, Plasma Sources Science and Technology, Volume 25, Number 4, 2016). The radiation by photons whose energy exceeds a few eV (UV and VUV radiation) causes radiation damage to polymers, so the plasma treatment, as disclosed in GB2120694, may not be suitable for many applications.

### Description of the solution to the technical problem

While the deposition of a hydrophobic coating is a natural choice for reducing the wettability of cellulose and cellulose-containing polymers, it represents an ecological hazard and is often a time-consuming method when using non-equilibrium gaseous plasma for radicalization of the hydrophobic precursor. Therefore, it is an object of the invention to provide a chemicals-free method that would enable rapid hydrophobization of cellulose materials without residues. The hydrogen plasma treatment is ecologically benign, but the long treatment times represent a drawback in mass production. Furthermore, hydrogen plasma is a source of energetic photons that damage the surface film of a thickness corresponding to the penetration depth of photons, which are often between 0.1 and 10 µm, depending on the photon energy.

The technical problem is solved as defined in the independent claim, wherein the preferred embodiments are defined in dependent claims.

The methods, according to the invention, employ hydrogen atoms, and the appropriate surface wettability is typically achievable within a second of treatment. In contrast to GB2120694, which uses H₂ plasma treatments at the minute scale, the present invention has treatments of durations at the second scale, for example, up to 10 seconds. Thus, damage to polymers is minimized or at least reduced while still achieving suitable surface change.

According to the present invention, the cellulose materials are treated with hydrogen atoms to ensure rapid destruction of the hydrophilic functional groups on the cellulose surface. Without wishing to be bonded by theory, it is believed that a brief treatment of cellulose materials with hydrogen atoms results in the depletion of the cellulose surface from hydroxyl groups. According to the present invention, the hydroxyl groups on the cellulose surface interact chemically with hydrogen atoms to form a water molecule and substitute the hydroxyl group (-C-OH) with olefine-like, i.e., stimulating the reaction R-C-OH + 2H → R-C-H + H₂O. Here, R is any molecular radical, including a cellulose radical. The reaction occurs in a hydrogen atmosphere rich in hydrogen atoms (H), not hydrogen molecules (H₂). Namely, molecules will not interact with the cellulose surface functional groups at room temperature, while high temperatures will destroy the functional properties of cellulose. Preferably, the treatment of cellulose materials is performed at low pressure, preferably below about 1000 Pa. As the pressure is increased, either the degree of dissociation of hydrogen molecules decreases, or the temperature of the gas increases, or both. If the pressure is too high, the atoms combine back into molecules by gas-phase recombination due to three-body collisions, i.e., H + H + H₂ → H₂ + H₂. Furthermore, this reaction is highly exothermic, so the gas may be heated to prohibitively high temperatures.

The surface reaction R-C-OH + 2H → R-C-H + H₂O is likely to occur when a cellulose sample is exposed to atoms in the absence of plasma. Namely, hydrogen plasma is a source of radiation, and the energetic photons break bonds in the bulk material, thus causing irreversible modification of the polymer structure and loss of its functional properties. An atmosphere rich in hydrogen atoms but free from radiation and charged particles could be created by several techniques, including the hydrogen plasma afterglow (i.e., by passing molecular hydrogen through plasma sustained by an appropriate discharge) or passing hydrogen molecules through heated tubes, meshes, or other porous materials to benefit from surface dissociation of hydrogen molecules to H atoms.

In one embodiment, the cellulose is treated in flowing hydrogen plasma afterglow. The flowing afterglow is obtained by passing molecular hydrogen through a plasma sustained by a continuous or pulsed discharge. The large gas velocity enables the H atoms to survey the transport from the plasma to the processing chamber. There is no plasma (just the flowing afterglow) in the processing chamber, so the atmosphere in the processing chamber contains a mixture of molecular and atomic hydrogen, free from energetic photons and charged particles.

In another embodiment, the cellulose material is treated in an atmosphere rich in H atoms, wherein the hydrogen molecules are passed through a heated tube. The tube is heated to a high temperature, typically over 1500 K, to ensure extensive production of H atoms by surface dissociation of hydrogen molecules. There is a pressure gradient between the heated tube and the processing chamber. The pressure gradient is essential for cooling the gas by adiabatic expansion.

The above-described embodiments preferably employ low-pressure conditions. Namely, if the pressure is below a few mbar, the loss of hydrogen atoms in the treatment chamber by the gas-phase association of H atoms to parent molecules is unlikely to occur, so the lifetime of atoms is long.

In one embodiment, the gas containing a noble gas, typically argon, but helium and other gases are useful as well, is subjected to plasma conditions, and hydrogen molecules dissociate well in such mixtures. The gas is then leaked from the plasma to the processing chamber in order to assure afterglow conditions, i.e., absence of radiation and charged particles. The abundance of noble gas suppresses the association of H atoms to parent molecules even at elevated pressure, so the H atoms remain available for the hydrophobization of cellulose materials.

In another embodiment, the cellulose material is treated by the afterglow of plasma sustained in ammonia. Namely, ammonia dissociates upon plasma conditions and provides enough H atoms for the hydrophobization of cellulose.

In all embodiments mentioned above, the hydrogen atoms are the reactants, and the flux of energetic photons or charged particles is negligible. The surface finish (i.e., the degree of the hydrophobization) thus depends on the dose of H atoms. In the scientific literature, the "dose" is often called the "fluence", but the meaning is the same. The dose is the flux integrated over the treatment time. If the flux is constant, the integral simplifies to the product, i.e., *D* = *j t,* where D is the dose, *j* is the flux of H atoms, and t is the treatment time. The flux is proportional to the density of H atoms in the vicinity of the cellulose product and the average thermal velocity of H atoms: *j* = ¼ *n <v>.* The average velocity <v> is proportional to the square root of the gas temperature. The preferred doses are from 1×10²⁰ to 3×10²³ m⁻² for the case of smooth cellulose materials like foils, and from 1×10²⁰ to 1×10²⁶ m⁻² for cellulose powder. Namely, the powder has orders of magnitude larger surface area than the geometric surface of powder that is poured into a dish.

It is essential to treat the cellulose materials with atomic hydrogen (not only hydrogen molecules) since the reduction of the hydroxyl surface groups with hydrogen molecules would occur only at high temperatures, definitely above the cellulose decomposition temperature. It is also essential to treat the cellulose materials at the absence of energetic photons or ions, because they cause radiation damage of cellulose materials.

The methods of the invention are used for treating cellulose powder or cellulose-comprising materials or cellulose materials with smooth surface, such as foils. It will be understood that the purity of cellulose materials is not particularly limited. The cellulose material may contain other polysaccharides, including but not limited to hemicellulose, lignin, chitosan, and similar materials. The cellulose material may also contain other polymers, both natural and synthetic. For example, the cellulose foil or powder may comprise other polymers, including but not limited to natural polymers such as polylactic acid and rubber or synthetic polymers. The methods enable the adjustable contact angle of a water droplet deposited onto cellulose or cellulose-comprising materials between about 70 and 120°.

The methods of invention enable the modification of cellulose to a degree of wettability, which is useful in numerous applications, particularly when synthesizing advanced polymer composites with cellulose fillers. Another application is for the treatment of water cups made from paper. Untreated paper absorbs water, so the cups are currently coated with a layer of hydrophobic polymer. If a water cup made from paper is treated according to the methods of invention, the water is not absorbed due to the hydrophobic character of treated paper.

The invention will be further described based on exemplary embodiments, examples, and figures, which show:

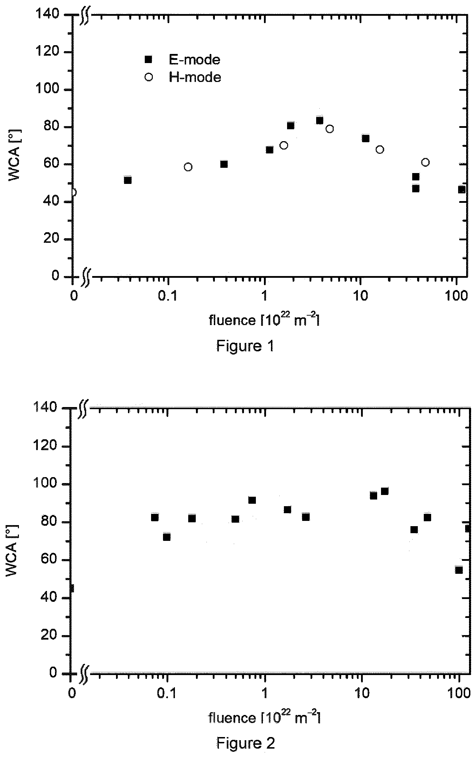

- Figure 1: shows the water contact angle on smooth cellulose films versus the dose of hydrogen atoms. The samples were exposed to early hydrogen plasma afterglow. The source of H atoms was hydrogen plasma, which was sustained by an electrodeless radiofrequency discharge at the power density of either 60,000 or 3,500,000 W/m³. The plasma was sustained either in the E or the H mode.
- Figure 2: shows the water contact angle on smooth cellulose films versus the dose of hydrogen atoms. The samples were exposed to a late flowing afterglow of weakly to moderately ionized hydrogen plasma sustained by an electrodeless microwave discharge at the power density of between 20,000,000 and 100,000,000 W/m³.

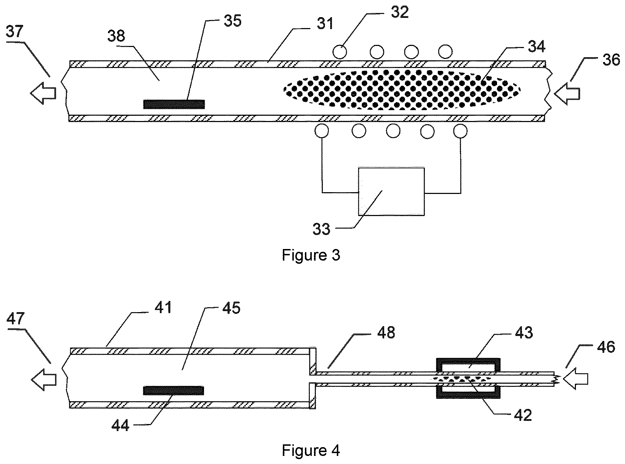

- Figure 3: shows the schematic of the setup that is useful for treating cellulose foils in the early afterglow of hydrogen plasma in batch mode. The processing chamber is a glass tube (31). A coil (32) is connected to an RF generator (33), which sustains hydrogen plasma (34) within the coil (32). A cellulose foil (35) is placed in the early afterglow (38). The gas inlet (36) supplies hydrogen, which is pumped on the other side of the glass tube (37) so that the gas drifts along glass tube (31) between the hydrogen plasma (34) and the pumping side of the glass tube (37).
- Figure 4: shows the schematic of the setup that is useful for treating cellulose foils in the late afterglow of hydrogen plasma in batch mode. The processing chamber is a glass tube (41). Hydrogen plasma is sustained in the higher-pressure discharge chamber (42) with a microwave cavity (43). A cellulose foil (44) is placed in the late afterglow (45). The gas inlet (46) supplies hydrogen, which is pumped on the other side (47) of the processing chamber (41). Gas drifts from the discharge chamber (42) into the processing chamber (41) through a narrow tube (48). There is a pressure gradient between the discharge chamber (42) and processing chamber (41), so the gas cools due to adiabatic expansion within the narrow tube (48). Cooling is essential because microwave plasmas are usually at the temperature over 1000 K. The microwave cavity (43) can be replaced by a hot tube to achieve the same effect, i.e., the dissociation of hydrogen molecules in the chamber (42).

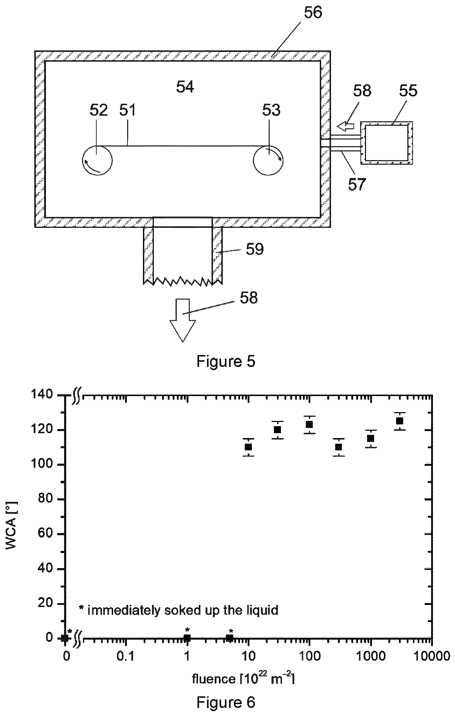

- Figure 5: shows the schematic of the setup that is useful for treating cellulose foils in the continuous mode, using the flowing afterglow of hydrogen plasma or any other external source of H atoms, for example, surface dissociation at high surface temperature.
- Figure 6: shows the water droplet contact angle on a cellulose powder versus the dose of hydrogen atoms.

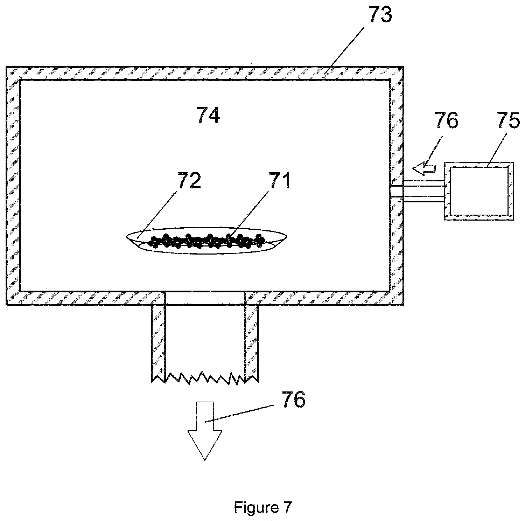

- Figure 7: shows the schematic of setup that is useful for treating cellulose powder with hydrogen atoms in batch mode.

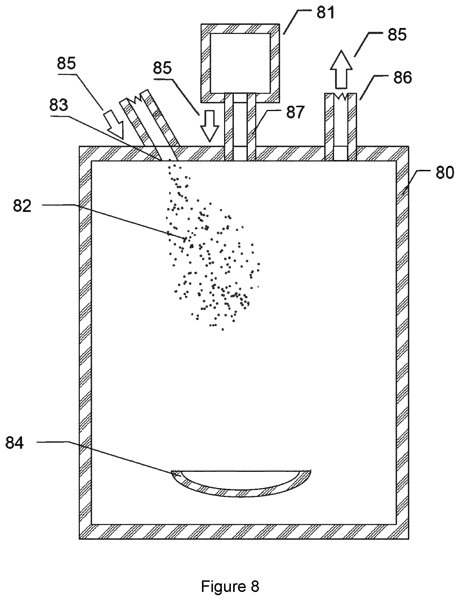

- Figure 8: shows the schematic of setup that is useful for treating cellulose powder in the continuous mode.

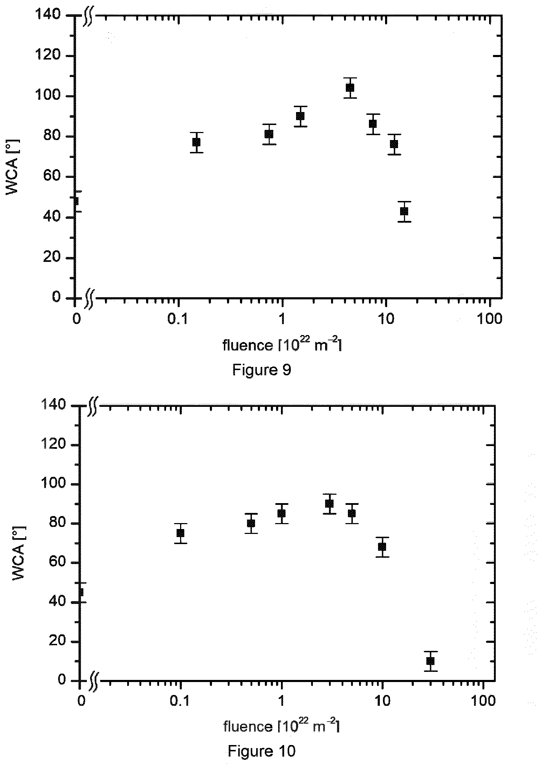

- Figure 9: shows the evolution of the WCA versus the H-atoms dose when treating cellulose foil with hydrogen atoms whose source was plasma sustained in a mixture of 1 vol.% hydrogen and 99 vol.% argon. Plasma was sustained by an electrodeless radiofrequency discharge at the power density of 30,000 W/m³. The electron temperature was about 35,000 K, and the gas pressure was 140 Pa.
- Figure 10: shows the evolution of the WCA versus the H-atoms dose when treating cellulose foil with hydrogen atoms whose source was plasma sustained in ammonia. Plasma was sustained by an electrodeless radiofrequency discharge at the power density of 30,000 W/m³. The electron temperature was about 35,000 K, and the gas pressure was 30 Pa.

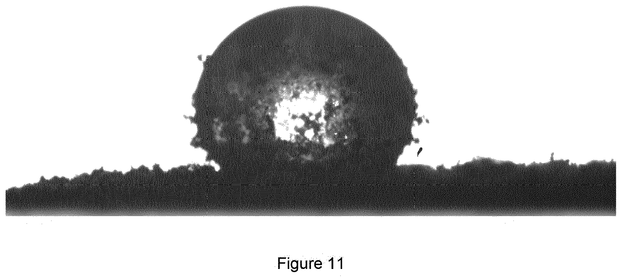

- Figure 11: shows a water droplet on the surface of fine cellulose powder of an average particle size of about 10 micrometers after receiving the H-atom dose of 10²⁴ m⁻².

### Detailed description of the solution to the technical problem

Regardless of the source of hydrogen atoms, the water droplet contact angle depends on the dose of H atoms, as revealed in Figures 1, 2, 6, 9, and 10. In Figure 1, the highest achievable WCA is about 80°. Figure 1 demonstrates that the optimal results in terms of achievable WCA are obtained by exposure hydrogen atoms in the early afterglow at the dose of about 3×10²² m⁻². The WCA versus the fluence does not depend on the discharge mode, although the E and H modes differ significantly, because the power density is orders of magnitude larger in the H mode. In Figure 2, the highest achievable WCA is about 90°. The treatment in hydrogen plasma late afterglow (Figure 2) enables a broader range of H-atom doses that are useful for the moderate hydrophobic character of the cellulose foil compared to the early afterglow, which might be a consequence of the adiabatic expansion of the gas when passing the narrow tube (48) and thus cooling the gas between the plasma and the position of the cellulose sample.

Without wishing to be bonded by theory, the maxima in the curves presented in Figures 1 and 2 are explained by two different effects. Increasing the H-atom dose causes more hydroxyl groups to be replaced with olefin groups following the reaction R-C-OH + 2H → R-C-H + H₂O. The treatment with high doses of H-atoms, however, triggers other reactions that are not beneficial, like depolymerization of cellulose chains. The two opposite effects cause a maximum in the curves, and the optimal treatment in terms of the hydrophobicity of treated cellulose foils occurs at a moderate dose of H atoms, which is between about 1 and 10×10²² m⁻². Similar results are obtained by treatment with afterglow of a plasma sustained in a gas mixture (hydrogen and argon) or ammonia - Figures 9 and 10.

The method for treatment of cellulose materials like foils according to a first embodiment (batch mode) is schematically shown in Figures 3 and 4, and comprises the following main steps:
a1) placing cellulose foil or a similar product into a vacuum chamber;
b1) evacuation of the vacuum chamber;
c1) adjustment of hydrogen pressure in the vacuum chamber and sustaining atmosphere rich in H atoms for treating cellulose with said H atoms;
d1) allowing H atoms to interact with the cellulose foil until the appropriate dose of H atoms is received;
e1) turning off the H-atom source, removing hydrogen from the vacuum chamber, venting the vacuum chamber, and taking the foil from the vacuum chamber.

The method for treatment of cellulose materials like foils according to a second embodiment (continuous mode) is schematically shown in Figure 5 and comprises the following main steps:
a2) placing a roll of cellulose in a vacuum chamber,
b2) evacuation of the vacuum chamber;
c2) adjustment of hydrogen pressure in the vacuum chamber and sustaining atmosphere rich in H atoms for treating cellulose with said H atoms;
d2) moving the foil from one to another roll during treatment with hydrogen atoms, thus allowing hydrogen atoms to interact with the cellulose foil;
e2) turning off the H-atom source, removing hydrogen from the vacuum chamber, venting the vacuum chamber, and taking the cellulose foil from the vacuum chamber.

The method for treatment of cellulose powder, according to a third embodiment schematically shown in Figure 7 (treatment in a batch mode), comprises the following main steps:
a3) placing cellulose powder in a dish in a vacuum chamber;
b3) evacuation of the vacuum chamber;
c3) adjustment of hydrogen pressure in the vacuum chamber and sustaining atmosphere rich in H-atoms at low pressure;
d3) optionally stirring the cellulose powder during treatment with hydrogen atoms;
e3) allowing hydrogen atoms to interact with the cellulose powder;
f3) turning off the H-atom source, removing hydrogen from the vacuum chamber, venting the vacuum chamber, and taking the cellulose powder from the vacuum chamber.

The method for treatment of cellulose powder, according to an embodiment schematically shown in Figure 8 (treatment in a continuous mode), comprises the following main steps:
a4) selecting vacuum chamber;
b4) evacuation of the vacuum chamber;
c4) adjustment of hydrogen pressure in the vacuum chamber and sustaining gas rich in H atoms at low pressure by introducing hydrogen atoms from a remote hydrogen plasma;
d4) treating the cellulose powder with H atoms from a remote source of hydrogen atoms;
e4) allowing hydrogen atoms to interact with the cellulose powder;
f4) turning off the H-atom source, removing hydrogen from the vacuum chamber, venting the vacuum chamber, and taking the cellulose powder from the vacuum chamber.

In a preferred embodiment, the treatment of cellulose materials is performed in the continuous mode, as shown in Figure 5 for the case of foils and similar objects like paper sheets or simple products like paper cups. The treatment of a cellulose foil or a similar product containing cellulose in the continuous mode is preferably performed by a roll-to-roll system: the foil (51) is initially on the first roll (52) before the treatment. One end of the foil (51) is fixed to the second roll (53), and the foil (51) is transferred from the first roll (52) to another roll (53), passing the atmosphere rich in H atoms (54). The large density of H-atoms (54) is provided by a remote source of H atoms (55) mounted into the processing chamber (56). Optionally, there is a narrow tube (57) between the processing chamber (56) and a remote source of H atoms (55). The gas drifting through the narrow tube (57) cools down by adiabatic expansion, so the pressure in the remote source of H atoms (55) is higher than in the processing chamber (56). The arrows (58) indicate the gas glow. The pump duct (59) is also marked in Figure 5.

In another preferred embodiment, the treatment of cellulose powder is performed in the continuous mode, as shown in Figure 8. The treatment chamber (80) is equipped with a remote source of H atoms (81). The remote source of H atoms (81) is a powerful hydrogen plasma or a hot metallic tube so that the powder (82) is treated with H atoms in the treatment chamber (80). The untreated cellulose powder is fed into the treatment chamber (80) through a feeding inlet (83) on the upper side of the treatment chamber (80). The cellulose powder (82) drops through the treatment chamber (80) because of the gravitation force. The powder is hydrophobized while falling through the treatment chamber (80), which is rich in H atoms, and sediments in the collecting dish (84) at the bottom of the treatment chamber (80). The arrows (85) indicate the gas flow. The exhaust (86) is connected to a vacuum pump so that low pressure is maintained in the treatment chamber (80) during the treatment of cellulose powder (82) with H atoms.

Optionally, there is a narrow tube (87) between the treatment chamber (80) and a remote source of H atoms (81). The gas drifting through the narrow tube (87) cools down by adiabatic expansion, so the pressure in the remote source of H atoms (81) is higher than in the treatment chamber (80).

### Examples

The usefulness of the methods of invention is demonstrated in the following examples.

### Example 1: cellulose foil treated in an early afterglow of hydrogen plasma

A cellulose foil was treated with hydrogen atoms according to the invention methods using the configuration in Figure 3. The cellulose treatment using an early afterglow of hydrogen plasma was performed at the following conditions: The residual atmosphere partial pressure in the treatment tube was below 1 Pa, the hydrogen partial pressure was either 15 or 30 Pa, and plasma in either E or H mode was sustained using an electrodeless inductively coupled RF discharge at the discharge power density of 10,000 W/cm³ and 6,000,000 W/cm³ for E and H mode, respectively. The foil was placed into early afterglow, as shown in Figure 3. There is marginal pressure drop along the tube (31) between the plasma (34) and the position of the sample (35). The evolution of the static water contact angle versus the H-atom dose when using early afterglow of hydrogen plasma as a source of H atoms is shown in Figure 1. The WCA gradually increases in the range of H-atom dose between 1×10²¹ m⁻² and 2×10²² m⁻², and reaches the maximum of about 80°. Such a moderately large WCA is useful for blending a few types of polymers with cellulose fillers. The surface finish of the cellulose foil treated with H atoms in the early afterglow of hydrogen plasma in the range of H-atom doses between 2×10²² m⁻² and 8×10²² m⁻² is almost perfect for blending poly(lactic acid) with cellulose. Poly(lactic acid) exhibits a static water contact angle in the range of 75-85°, so the matching of the wettability is optimized. The benefits of H-atom treatment are lost at larger doses. Figure 1 reveals a gradual decrease in the water droplet contact angle in the range of H-atom doses from about 4×10²² m⁻² to 1×10²⁴ m⁻². Without wishing to be bound by theory, it is assumed that the loss of the hydrophobicity is due to depolymerization of the cellulose chains on the surface of the cellulose foil at large doses of H atoms.

### Example 2: cellulose foil treated in a late afterglow of hydrogen plasma (hot H-atom source

A cellulose foil was treated with hydrogen atoms according to the invention methods using the configuration in Figure 4. The cellulose treatment with H atoms from the remote source (42) was performed at the following conditions: The residual atmosphere partial pressure below 1 Pa, and the hydrogen partial pressure in the treatment tube (41) was varied between 10 and 100 Pa. Plasma was sustained using an electrodeless microwave discharge at the discharge power density between 20,000,000 and 100,000,000 W/cm³. Such plasma is rather hot because of the high power density, so a narrow tube (48) was employed to cool the gas entering the treatment tube (41) by adiabatic expansion. In this example, the flux of hydrogen atoms onto the cellulose foil varied in a broad range between 1×10²² m⁻²s⁻¹ and 1×10²⁴ m⁻²s⁻¹ . The evolution of the static water contact angle versus the dose of H atoms when treating cellulose foil using the configuration disclosed in Figure 4 is shown in Figure 2. The water contact angle of about 90° is achievable in a broad range of H-atom doses from about 1×10²⁰ m⁻² and 2×10²³ m⁻². The benefits of treatment with H atoms are lost at large H-atom doses, especially above 10²³ m⁻². Without wishing to be bonded by theory, the broad range of useful doses is explained by cooling the gas between the H-atom source in the configuration presented in Figure 4.

### Example 3: cellulose powder treated with H atoms

This example proves the usefulness of the invention methods for the treatment of cellulose powder. The experimental setup is shown in Figure 7. Cellulose powder (71) was placed into a Petri dish (72) inside a processing chamber (73). The atmosphere (74) in the processing chamber (73) was rich in H atoms. The remote source of H atoms was a dense hot plasma sustained outside the processing chamber in a source (75), which was powered by a microwave generator. The arrows (76) indicate the gas glow. The contact angle of a water droplet deposited onto the cellulose powder versus the dose of H atoms is shown in Figure 6. The water droplet absorbs into the untreated powder in a short time, below 1 s. The fast absorption is preserved up to the H-atom dose of about 5×10²¹ m⁻². At larger doses, the water droplet remains on the cellulose powder and evaporates before being absorbed. The WCA remains fairly unchanged for H-atom doses above 1×10²² m⁻². The paradox, as compared to the foil (Figures 1 and 2), is explained by the peculiarities of the WCA method. Namely, the powder is much smaller than the water droplet, so the WCA does not reveal the wettability of single powder particles but rather the wettability of hydrophobic powder particles, which are dense enough to enable the lotus-leaf effect. The broad range of H-atom doses that prevent water absorption is explained by capturing the overdosed powder particles onto the surface of the water droplet, as shown in Figure 11.

### Example 4: cellulose foil treated in the afterglow of plasma sustained in an Ar/H₂ mixture

This embodiment discloses the application of methods for treating cellulose with H atoms, whose source is plasma sustained in a mixture of argon and hydrogen. The experimental system disclosed in Figure 3 was used. Plasma (34) was sustained in a mixture of 99 vol.% Ar and 1 vol.% hydrogen. Such a gas mixture enables almost total dissociation of hydrogen molecules. The evolution of the water contact angle versus the dose of H atoms is shown in Figure 9. The maximal WCA is obtained at the dose of H atoms of about 5×10²² m⁻². A rapid decrease in the WCA is observed at larger doses, and the sample treated with about 2×10²³ H atoms reassumes the WCA of an untreated sample.

### Example 5: cellulose foil treated in the afterglow of plasma sustained in ammonia

This embodiment discloses the application of methods for treating cellulose with H atoms, whose source is plasma sustained in ammonia. The experimental system disclosed in Figure 3 was used. Plasma (34) was sustained in pure ammonia. The evolution of the water contact angle versus the dose of H atoms is shown in Figure 10. The maximal WCA is obtained at the dose of H atoms of about 3×10²² m⁻². A rapid decrease in the WCA is observed at larger doses, and the sample treated with about 3×10²³ H atoms becomes extremely hydrophilic with a water droplet contact angle of about 10°.

### Example 6: kitchen towels treated in the afterglow of plasma sustained in hydrogen

This embodiment discloses the application of methods for treating paper, which comprises cellulose, some organic additives, and calcium carbonate. Such cellulose materials are intended for the rapid sorption of water. A sheet of a kitchen towel was treated with H atoms, whose source is plasma which is sustained hydrogen. An experimental system schematically presented in Figure 3 was used. A water droplet deposited on the sheet after receiving the dose of H atoms 3×10²³ m⁻² did not absorb into the kitchen towel but dried in the air at ambient conditions.

## Claims

1. A method for rapid hydrophobization of cellulose or cellulose-comprising materials, wherein said materials are treated with hydrogen atoms in the absence of energetic photons, and the dose of hydrogen atoms is from 1×10²⁰ to 1×10²⁶ m⁻².

2. The method according to claim 1, wherein smooth cellulose materials like foils are treated with a dose of hydrogen atoms from 1×10²⁰ to 3×10²³ m⁻², or cellulose powders are treated with a dose of hydrogen atoms from 1×10²² to 1×10²⁶ m⁻².

3. The method according to claim 1 or claim 2, wherein the source of hydrogen atoms is hydrogen plasma, which is sustained outside the treatment chamber.

4. The method according to claim 1 or claim 2, wherein the source of hydrogen atoms is thermal dissociation of hydrogen molecules on the surface of heated materials through which the hydrogen atoms are delivered to the treated cellulose.

5. The method according to claim 1 or 2, wherein the source of hydrogen atoms is a remote plasma sustained in ammonia or a mixture of hydrogen and ammonia.

6. The method according to claim 1 or claim 2, wherein the source of hydrogen atoms is a remote plasma sustained in a mixture of hydrogen with a noble gas.

7. The method according to any of the preceding claims, wherein the treatment with hydrogen atoms lasts for up to ten seconds.

8. The method according to any of the preceding claims, wherein the cellulose or cellulose-containing materials are in the form of foils, powder, rods, or as products with a more complex shape.

9. Use of cellulose powder treated according to any of the preceding claims in a process comprising a step of mixing with biopolymers.

10. The method according to any of the preceding claims, wherein paper and paper products such as paper cups for drinking are treated with a dose of hydrogen atoms from 1×10²⁰ to 3×10²³ m⁻².

11. Paper or paper products treated with the method according to any of the preceding claims showing hydrophobic properties of their surface.

12. Paper or paper products according to claim 11, wherein the paper product is a paper cup for drinking.
